(19) Europäisches Patentamt
European Patent Office
Office européen des brevets

(11) **EP 2 781 274 B1**

(12) **EUROPEAN PATENT SPECIFICATION**

(45) Date of publication and mention of the grant of the patent:
**23.09.2015 Bulletin 2015/39**

(51) Int Cl.:
***B21B 35/14*** *(2006.01)*

(21) Application number: **14160631.9**

(22) Date of filing: **19.03.2014**

(54) **Spindle unit for rolling mill**

Spindeleinheit für Walzwerk

Unité de broche pour laminoir

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.03.2013 JP 2013058992**

(43) Date of publication of application:
**24.09.2014 Bulletin 2014/39**

(73) Proprietor: **JTEKT CORPORATION Osaka-shi Osaka 542-8502 (JP)**

(72) Inventor: **Komeyama, Nobuo Osaka-shi,, Osaka 542-8502 (JP)**

(74) Representative: **Winter, Brandl, Fürniss, Hübner, Röss, Kaiser, Polte - Partnerschaft mbB Patent- und Rechtsanwaltskanzlei Bavariaring 10 80336 München (DE)**

(56) References cited:
**WO-A1-2006/114138    DE-U1- 9 014 706
JP-A- H03 153 923      JP-A- H07 256 311**

**Description**

BACKGROUND OF THE INVENTION

1. Field of the Invention

The invention relates to a spindle unit for a rolling mill.

2. Description of the Related Art

For example, a rolling mill for rolling an iron or steel material includes a pair of upper and lower rolls, a drive source for rotating the rolls, and a spindle unit disposed between the rolls and the drive source. The spindle unit includes a pair of drive shafts and a pair of cross joints. The drive shafts are rotated by the drive source. The cross joins couple the drive shafts and the rolls to each other. The spindle unit is configured to transmit the rotations of the drive shafts to the rolls in a state where the cross joints allow the rolls to move up and down with respect to a steel material under rolling (refer to, for example, Japanese Patent Application Publication 2000-42614).

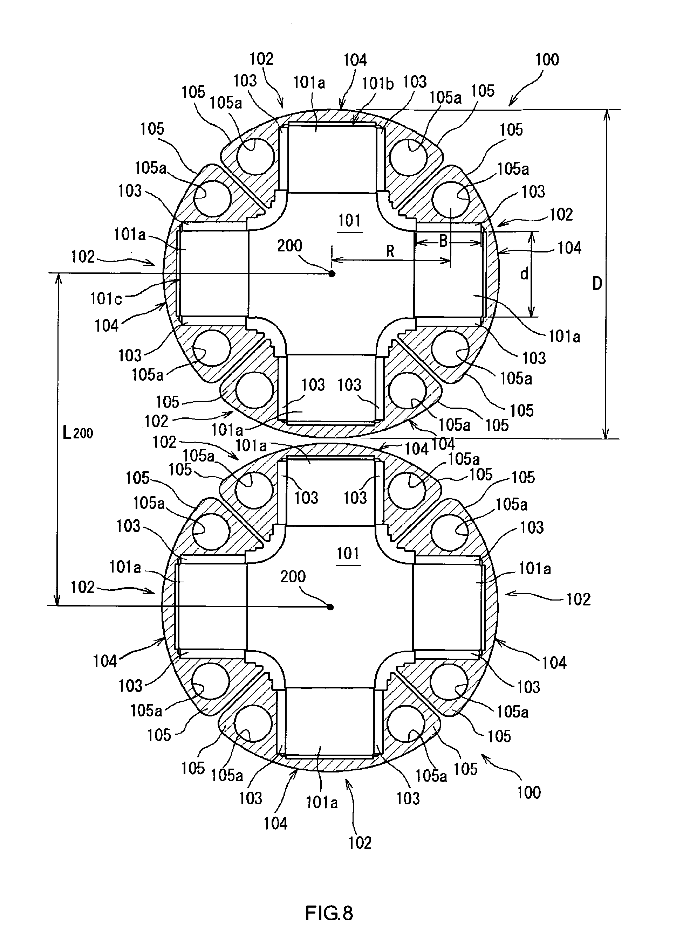

FIG. 8 is a sectional view that illustrates a pair of conventional cross joints 100. The cross joints 100 are disposed close to each other in the up-down direction. Each of the cross joints 100 includes a joint spider 101 that has four shaft portions 101a arranged in a cross shape as a whole and that is rotatable about a central axis 200, and bearings 102. Each of the bearings 102 includes a plurality of cylindrical rollers 103 and a bearing cup 104. The cylindrical rollers 103 are rolling elements that roll on the outer peripheral face of the shaft portion 101a. The bearing cup 104 is fitted onto the shaft portion 101a via the cylindrical rollers 103. Bearing holders 105 are formed integrally with the bearing cup 104. Each bearing holder 105 has a generally sector sectional shape of which the center (the center of a circle including the sector) coincides with the central axis 200, and located radially outward of the shaft portion 101a. Fitting holes 105a, through which bolts or the like are passed, are formed in the bearing holders 105. A roll (not illustrated) and a drive shaft (not illustrated) are respectively coupled, via the bearings 102, to a vertical shaft and a transverse shaft, each of which is formed of two of the four shaft portions 101a of the joint spider 101, the two of the four shaft portions 101 are aligned on a straight line. Thus, (rotary) torque is transmitted from the drive shaft to the roll via the cross joint 100.

In general, a peeling resistance life L of the cross joint 100 is computed according to Formula (1) in which a rated torque Tr is used.

$$L = 3000 \cdot Km \cdot (Tr \cdot Ks \cdot k\alpha \,/\, Tm)\, 2.907 \qquad (1)$$

In Formula (1), Km is a material coefficient, Ks is a velocity coefficient, k$\alpha$ is an angular coefficient, and Tm is an average torque. Thus, the peeling resistance life L is increased by increasing the value of the rated torque Tr.

The rated torque Tr is usually computed according to Formula (2).

$$Tr = (d \cdot B \cdot R)\, 0.992 \,/\, 154.5 \qquad (2)$$

In Formula (2), d is the diameter of each shaft portion 101a of the joint spider 101 (raceway diameter), B is an effective contact length of each cylindrical roller 103, and R is an action radius (the distance from the center of the joint spider 101 to the axial center of each cylindrical roller 103) (refer to FIG. 8). Therefore, the peeling resistance life L is increased by increasing the value of the rated torque Tr.

In the case of increasing the value of the rated torque Tr, it is necessary to set the values of the diameter d of each shaft portion 101a, the effective contact length B of each cylindrical roller 103 and the action radius R such that the cross joints 100 disposed close to each other in the up-down direction do not make contact with each other. Thus, in the case of increasing the diameter d of the shaft portion 101a in order to increase the value of the rated torque Tr, the following problems may occur because the outer diameter D of the cross joint 100 is not allowed to be increased.

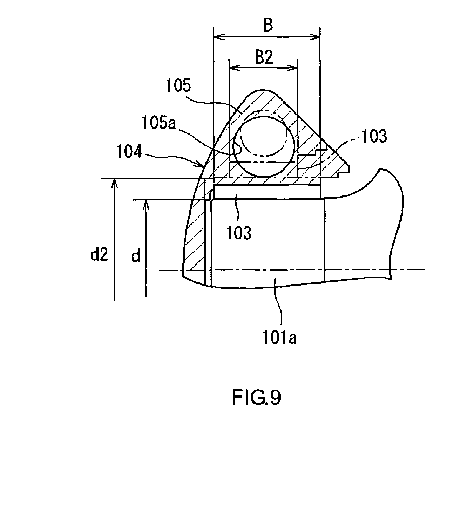

Because each bearing holder 105 has a generally sector sectional shape on the radially outward of the shaft portion 101a, if the diameter d of the shaft portion 101a is increased up to a diameter d2 as illustrated in FIG. 9, the sectional area of the bearing holder 105 is reduced. Thus, if the diameter d is set to d2, the effective contact length of each cylindrical roller 103 becomes B2 that is smaller than the effective contact length B in the case where the diameter of each shaft portion 101a is set to the diameter d. As a result, it is not possible to increase the value of the rated torque Tr, and therefore it is not possible to increase the peeling resistance life of the cross joint 100.

In order to increase the rated torque Tr, the outer peripheral face of each bearing cup 104 may be projected radially outward to increase the effective contact length B. However, as is clear from FIG. 8, if the outer peripheral face of each bearing cup 104 is projected radially outward, the outer peripheral faces of the bearing cups 104 of the paired cross joints 100, which are disposed close to each other in the up-down direction, make contact with each other. Thus, the effective contact length B is not allowed to be increased.

Further, as for the spindle unit, reduction in the installation space for the pair of upper and lower cross joints 100 is demanded in order to reduce the diameter of each roll of the rolling mill.

The preamble of claim 1 is based on JP 07256311.

## SUMMARY OF THE INVENTION

One object of the invention is to provide a spindle unit for a rolling mill, configured to increase the service life of cross joints and reduce the installation space for the cross joints.

An aspect of the invention relates to a spindle unit for a rolling mill, including: a pair of drive shafts that respectively rotate a pair of rolls; and a pair of cross joints respectively coupled to a pair of roll-side end portions of the drive shafts or a pair of end portions of the drive shafts, the pair of end portions being on an opposite side of the drive shafts from the roll-side end portions. Each of the cross joints includes a joint spider that has four shaft portions arranged in a cross shape and that is rotatable about a central axis of the joint spider, a plurality of rolling elements that roll on outer peripheral faces of the shaft portions, four bearing cups respectively fitted on the shaft portions via the rolling elements and each having a bottomed cylinder shape, and bearing holders disposed between the bearing cups that are adjacent to each other and having fitting portions attached to another member. Outer faces of the fitting portions are recessed from outer faces of bottom portions of the bearing cups toward the central axis to define recessed portions between the adjacent bearing cups of the cross joint. The paired cross joints are arranged with a prescribed phase difference in rotational directions about the central axes. The paired cross joints are arranged in such a manner that the outer face of one of the bottom portions of the bearing cups of one of the paired cross joints is inserted in one of the recessed portions of the other one of the paired cross joints.

## BRIEF DESCRIPTION OF THE DRAWINGS

The foregoing and further features and advantages of the invention will become apparent from the following description of example embodiments with reference to the accompanying drawings, wherein like numerals are used to represent like elements and wherein:

FIG. 1 is a schematic side view illustrating a rolling mill including a spindle unit for a rolling mill according to a first embodiment of the invention;

FIG. 2 is a sectional view illustrating a pair of cross joints of the spindle unit for a rolling mill, taken along the line A-A in FIG. 1;

FIG. 3 is an enlarged sectional view illustrating a bearing of the cross joint;

FIG. 4 is a plan view illustrating the bearing;

FIG. 5 is a sectional view illustrating a pair of cross joints of a spindle unit for a rolling mill according to a second embodiment of the invention;

FIG. 6 is an enlarged sectional view illustrating a bearing of the cross joint in FIG. 5;

FIG. 7 is a plan view illustrating the bearing in FIG. 6;

FIG. 8 is a sectional view illustrating a pair of conventional cross joints; and

FIG. 9 is an enlarged sectional view illustrating main portions of the conventional cross joint.

## DETAILED DESCRIPTION OF EMBODIMENTS

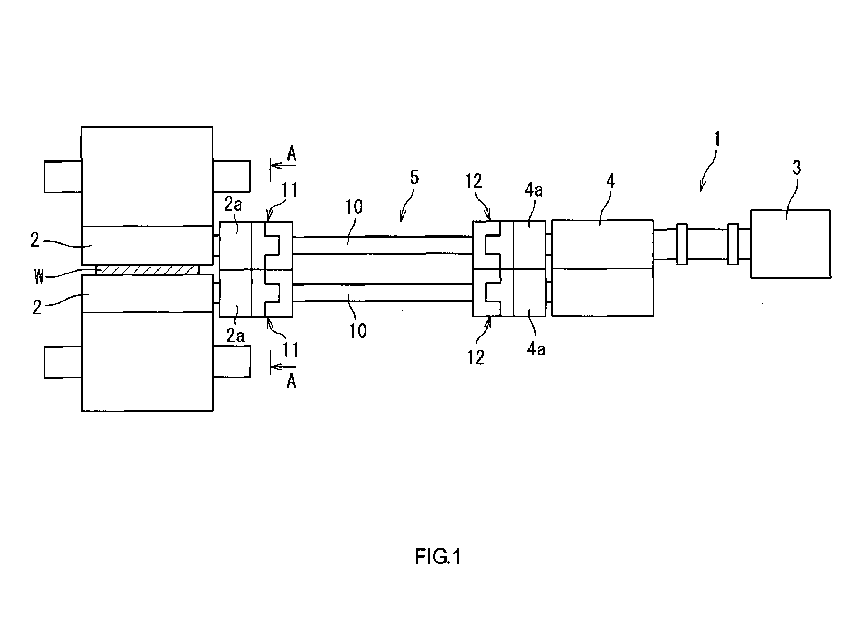

Hereinafter, example embodiments of the invention will be described with reference to the accompanying drawings. FIG. 1 is a schematic side view illustrating a rolling mill 1 including a spindle unit 5 for a rolling mill according to a first embodiment of the invention As illustrated in FIG. 1, the rolling mill 1 in the present embodiment is a steel rolling mill for rolling, for example, a steel material W. The rolling mill 1 includes a pair of upper and lower rolls 2, a motor 3, a speed reducer 4 and the spindle unit 5 for a rolling mill. The motor 3 is a drive source for rotating the rolls 2. The speed reducer 4 reduces the speed of rotation of the motor 3. The spindle unit 5 for a rolling mill is disposed between the rolls 2 and the speed reducer 4.

The spindle unit 5 for a rolling mill is configured to transmit torques output from output shafts 4a of the speed reducer 4 to rotary shafts 2a of the rolls 2 in a state where the rolls 2 are allowed to move up and down with respect to the steel material W under rolling. The spindle unit 5 for a rolling mill includes a pair of drive shafts 10 that rotate the respective rolls 2. Further, the spindle unit 5 for a rolling mill includes a pair of first cross joints 11 and a pair of second cross joints 12. The first cross joints 11 are respectively coupled to the rolls 2-side end portions of the drive shafts 10. The second cross joints 12 are respectively coupled to the speed reducer 4-side end portions of the drive shafts 10.

The second cross joints 12 are coupled to the output shafts 4a of the speed reducer 4 so as to transmit the torques output from the output shafts 4a of the speed reducer 4 to the drive shafts 10. The first cross joints 11 are coupled to the rotary shafts 2a of the rolls 2 so as to transmit the torques of the drive shafts 10 to the rotary shafts 2a of the rolls 2. Note that the configuration of the first cross joints 11 is substantially the same as that of the second cross joints 12, and therefore only the configuration of the first cross joints 11 will be described in the present embodiment.

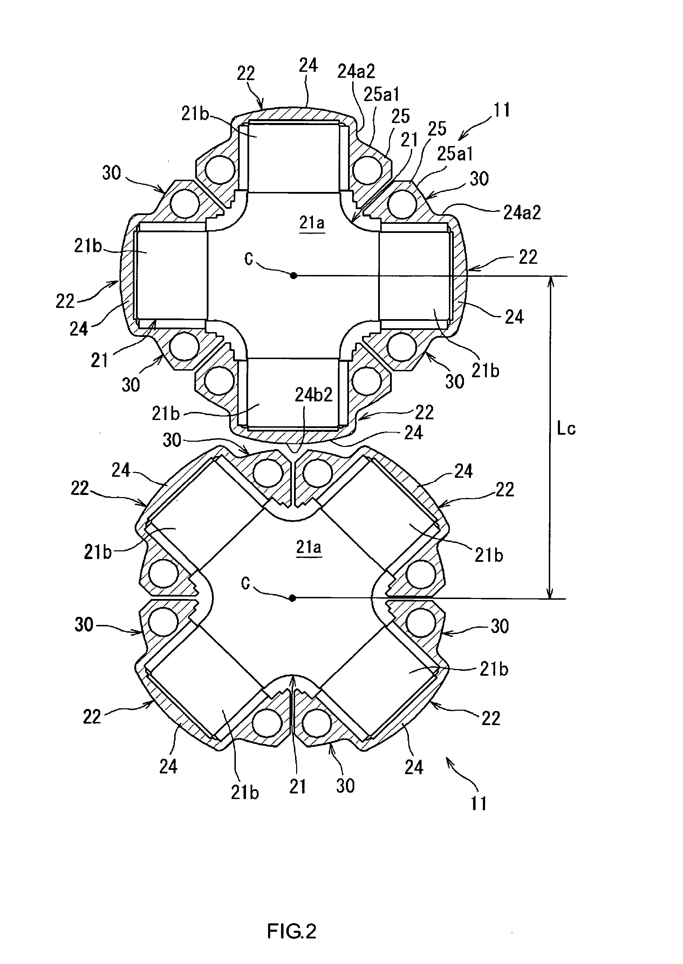

FIG. 2 is a sectional view illustrating a pair of the first cross joints 11 taken along the line A-A in FIG. 1 As illustrated in FIG. 2, each of the first cross joints 11 includes a joint spider 21 and four bearings 22. The joint spider 21 has four shaft portions 21b arranged in a cross shape as a whole. The bearings 22 are fitted to the respective shaft portions 21b. The joint spider 21 has a body portion 21a located at its center, and the four shaft portions 21b. The shaft portions 21b are extended from the body portion 21a in four directions which are orthogonal to each other. The joint spider 21 is rotatable about a central axis C that passes through the center of the body portion 21a.

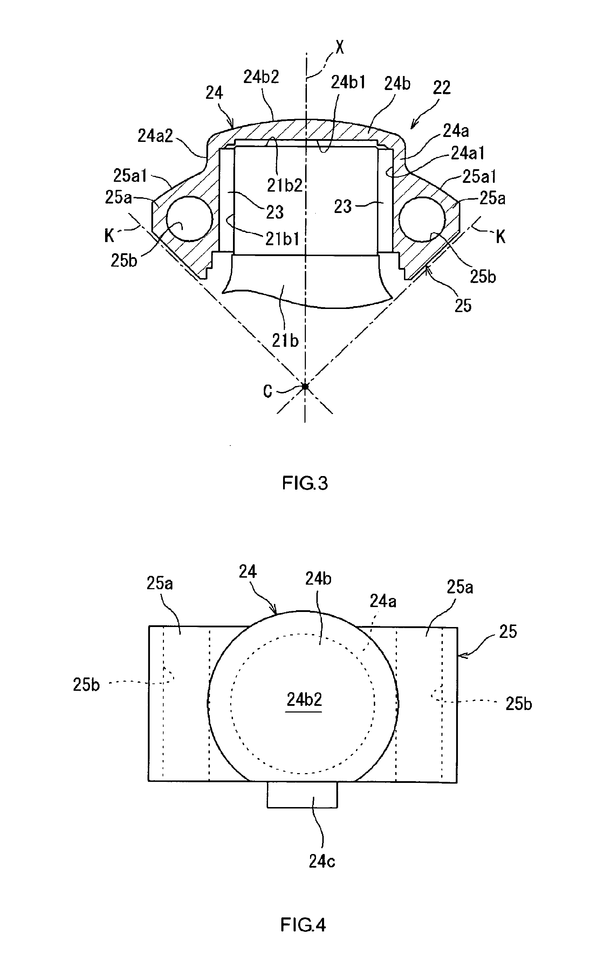

FIG. 3 is an enlarged sectional view that illustrates the bearing 22 of the first cross joint 11. FIG. 4 is a plan view that illustrates the bearing 22. As illustrated in FIG. 3 and FIG. 4, each bearing 22 includes a plurality of cylindrical rollers (rolling elements) 23, a bearing cup 24 and a bearing holder 25. The cylindrical rollers 23 are disposed so as to be rollable on an outer peripheral face 21b1 of the corresponding shaft portion 21b. The bearing cup 24 is formed in a bottomed cylinder shape. The bearing cup 24 has a cylindrical portion 24a and a bottom portion 24b. The bottom portion 24b closes one axial end of the cylindrical portion 24a.

The cylindrical portion 24a of the bearing cup 24 is fitted on the outer peripheral face 21b1 of the shaft portion 21b via the cylindrical rollers 23. Thus, the cylindrical rollers 23 roll on an inner peripheral face 24a1 of the cylindrical portion 24a, which serves as an outer raceway, and the outer peripheral face 21b1 of the shaft portion 21b, which serves as an inner raceway. Thus, the bearing cup 24 is rotatable about a central axis X of the shaft portion 21b. A fitting protrusion 24c to be fitted to the rotary shaft 2a of the corresponding roll 2 or the corresponding drive shaft 10 is integrally formed with and projected from a portion of the cylindrical portion 24a in its circumferential direction (refer to FIG. 4). An inner face 24b1 of the bottom portion 24b of the bearing cup 24 is opposed to an end face 21b2 of the shaft portion 21b. An outer face 24b2 of the bottom portion 24b is formed in a circular-arc shape of which the center (the center of a circle having the circular arc) coincides with the central axis C of the joint spider 21.

As illustrated in FIG. 2, the four bearing holders 25 of the bearings 22 are used to couple a transverse shaft and a vertical shaft of the joint spider 21, each of which is formed of two shaft portions 21b aligned on one straight line, respectively to the rotary shaft 2a of the corresponding roll 2 and the corresponding drive shaft 10. As illustrated in FIG. 3 and FIG. 4, the bearing holder 25 in the present embodiment is formed of a pair of fitting portions 25a aligned on one straight line with the bearing cup 24 interposed therebetween as viewed in a planar view. As illustrated in FIG. 2, each of the fitting portions 25a of one bearing holder 25 is located between the bearing cups 24 that are adjacent to each other, along with one of the fitting portions 25a of another bearing holder 25 that is adjacent to the one bearing holder 25.

As illustrated in FIG. 3 and FIG. 4, each of the fitting portions 25a has a fitting hole 25b through which a bolt (not illustrated) to be screwed to another member (the rotary shaft 2a or the drive shaft 10 in the present embodiment) is passed. The fitting hole 25b extends though the fitting portion 25a in its thickness direction. The fitting portions 25a are integrally formed with the outer periphery of the cylindrical portion 24a. Each fitting portion 25a is formed in a generally sector sectional shape of which the center coincides with the central axis C of the joint spider 21. Specifically, each fitting portion 25a is formed in a generally sector sectional shape located in an angular region extending from the outer periphery of the cylindrical portion 24a to an imaginary line K that is tilted by an angle of 45° with respect to the central axis X of the shaft portion 21b.

Each of the fitting portions 25a has a circular arc-shaped outer face 25a1 of which the center coincides with the central axis C. The outer face 25a1 is formed so as to be recessed toward the central axis C with respect to the outer face 24b2 of the bottom portion 24b of the bearing cup 24. Thus, as illustrated in FIG. 2, a recessed portion 30 is defined, between the adjacent bearing cups 24, by the outer faces 25a1 of the two fitting portions 25a and outer peripheral faces 24a2 of the cylindrical portions 24a of the adjacent bearing cups 24.

As illustrated in FIG. 2, the paired first cross joints 11 are arranged with a prescribed phase difference (45° in the present embodiment) in the rotational directions around the central axes C. Note that the phase difference means an angular difference about the central axes, between the direction of a straight line on which two of the shaft portions 21b of one of the joint spiders 21 are aligned and the direction of a straight line on which two of the shaft portions 21b of the other one of the joint spiders 21 are aligned, in a state where the central axes C of the joint spiders 21 of the paired first cross joints 11 are aligned on the same straight line. Further, the paired first cross joints 11 are arranged in such a manner that the outer face 24b2 of one of the bottom portions 24b of one of the bearing cups 24 of the one of the first cross joints 11 is inserted in one of the recessed portions 30 of the other one of the first cross joints 11. In the present embodiment, the outer face 24b2 of one of the bottom portions 24b of one of the first cross joints 11 is inserted in one of the recessed portions 30 of the other one of the first cross joints 11, whereby a distance Lc between the central axes C of the first cross joints 11 is set shorter than the distance $L_{200}$ between the central axes of the conventional cross joints 100.

Thus, in the spindle unit 5 for a rolling mill in the present embodiment, the paired first cross joints 11 are disposed such that the distance between the first cross joints 11 is shorter than that between the paired conventional cross joints. Thus, the paired first cross joints 11 require smaller space. Further, because the phase difference is set to 45° as described above, the paired first cross joints 11 are allowed to rotate stably without making contact with each other.

In the present embodiment, the outer face 24b2 of one of the bottom portions 24b of one of the paired first cross joints 11 is inserted in one of the recessed portions 30 of the other one of the first cross joints 11, whereby the distance Lc between the central axes C is set short. However, the distance Lc may not be changed. That is, the shaft portions 21b of the joint spiders 21 of the paired first cross joints 11 are set to be longer in the directions of the central axes X than the shaft portions of the conventional cross joints. With this configuration, the outer face 24b2 of one of the bottom portions 24b of one of the paired first cross joints 11 is allowed to be inserted in one of the recessed portions 30 of the other one of the paired first cross joints 11. In this case, the effective contact length of the cylindrical rollers 23 can be increased without changing the diameter of the shaft portions 21b, unlike in the related art. As a result, the rated torque can be increased, and it is therefore possible to increase the peeling resistance life of the first cross joints 11.

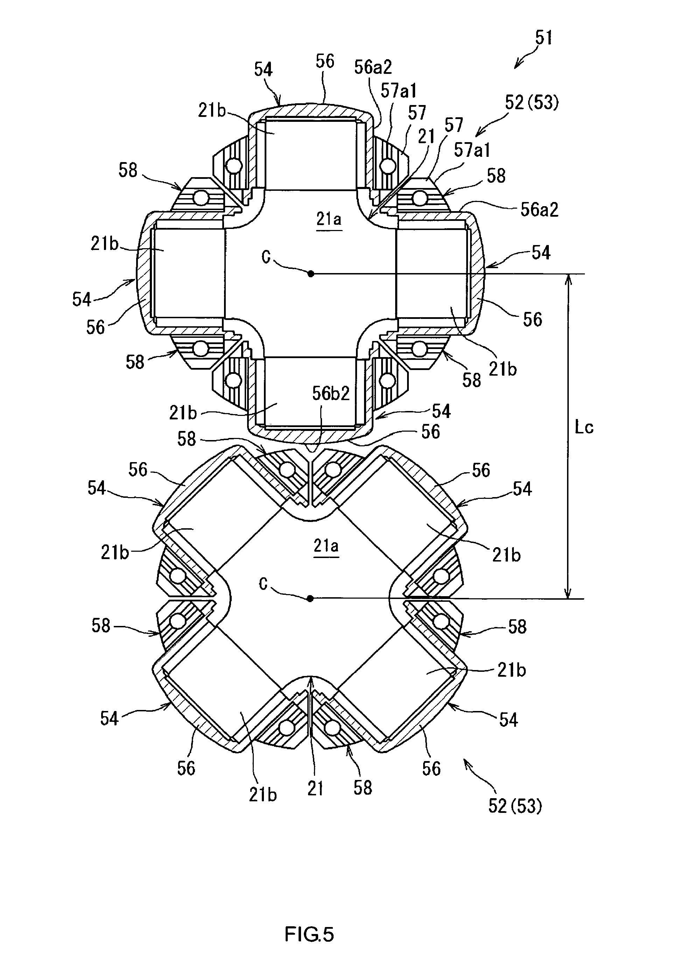

FIG. 5 is a sectional view that illustrates a pair of first cross joints 52 of a spindle unit 51 for a rolling mill according to a second embodiment of the invention. The spindle unit 51 for a rolling mill in the present embodiment differs from the spindle unit 5 in the first embodiment, in that bearing holders 57 of bearings 54 of the first and second cross joints 52, 53 are formed as members different from bearing cups 56. Note that the configuration of the first cross joints 52 is the same as the configuration of the second cross joints 53, and therefore only the first cross joints 52 will be described below.

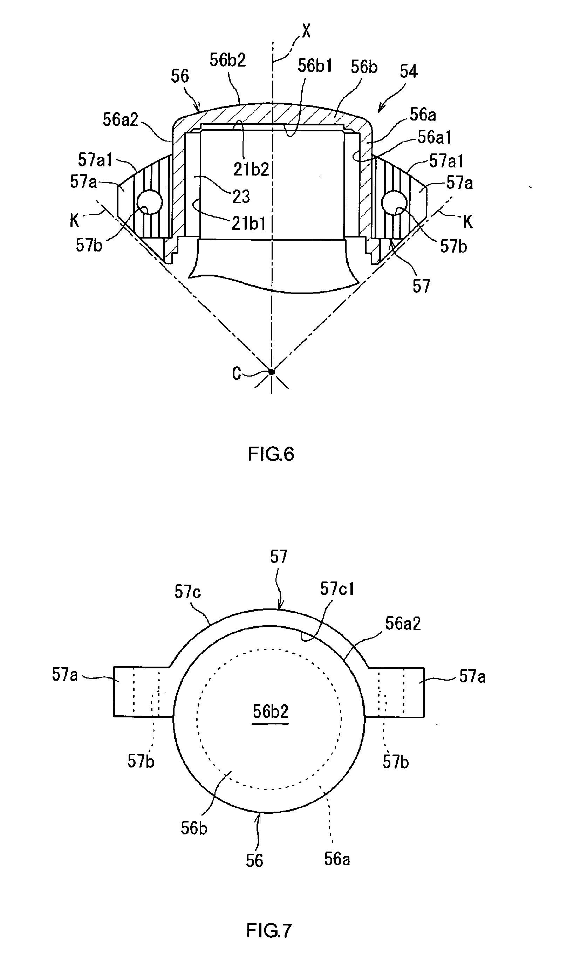

FIG. 6 is an enlarged sectional view that illustrates the bearing 54 of the first cross joint 52. FIG. 7 is a plan view that illustrates the bearing 54. As illustrated in FIG. 6 and FIG. 7, each bearing holder 57 of the bearing 54 is formed of a pair of fitting portions 57a and a connection portion 57c. The connection portion 57c connects the fitting portions 57a to each other. Each fitting portion 57a has a circular arc-shaped outer face 57a1 of which the center (the center of a circle having the circular arc) coincides with the central axis C. A fitting hole 57b, through which a bolt (not illustrated) to be screwed into an another member (the rotary shaft 2a or the drive shaft 10 in the present embodiment) is passed, is formed in each fitting portion 57a so as to extend through the fitting portion 57a in its thickness direction.

The connection portion 57c is formed in a generally semicircular shape as viewed in a planar view, and the fitting portions 57a are integrally formed with opposite end portions of the connection portion 57c. An inner peripheral face 57c1 of the connection portion 57c has a radius set to substantially equal to that of an outer peripheral face 56a2 of a cylindrical portion 56a of the bearing cup 56, and the inner peripheral face 57c1 covers one-half of the outer peripheral face 56a2 (the upper half in FIG. 7). The remaining half (the lower half in FIG. 7) of the outer peripheral face 56a2 of the cylindrical portion 56a is fitted in a fitting recess (not illustrated) formed on the rotary shaft 2a (roll 2) side or the drive shaft 10 side. The cylindrical portion 56a has an inner peripheral face 56a1 that serves an outer raceway on which the cylindrical rollers 23 roll. The bearing cup 56 has a bottom portion 56b having an inner face 56b1 that is opposed to an end face 21b2 of the shaft portion 21b.

As illustrated in FIG. 5, in the paired first cross joints 52 in the present embodiment, as in the paired first cross joints 11 in the first embodiment, the outer face 56b2 of one of the bottom portions 56b of one of the paired first cross joints 52 is inserted in one of recessed portions 58 of the other one of the paired first cross joints 52, whereby a distance Lc between the central axes C of the first cross joints 52 is set shorter than the distance $L_{200}$ between the central axes of the conventional cross joints 100. As illustrated in FIG. 5, each of the recessed portions 58 is defined, between the adjacent bearing cups 56, by the outer faces 57a1 of the two fitting portions 57a and the outer peripheral faces 56a2 of the cylindrical portions 56a of the adjacent bearing cups 56. Thus, in the spindle unit 51 for a rolling mill in the present embodiment as well, the paired first cross joints 52 are disposed such that the distance between the first cross joints 52 is shorter than that between the paired conventional cross joints. Thus, the paired cross joints 52 require smaller space.

In the present embodiment as well, the shaft portions 21b of the joint spider 21 of the paired first cross joints 52 may be set to be longer in the directions of the central axes X than the shaft portions of the conventional cross joints without reducing the distance Lc between the central axes. In this case, the effective contact length of the cylindrical rollers 23 can be increased without changing the diameter of the shaft portions 21b, unlike in the related art. As a result, the rated torque can be increased, and it is therefore possible to increase the peeling resistance life of the first cross joints 52. The configurations in the present embodiment other than those described above are similar to those described in the first embodiment, and therefore description thereof will be omitted.

Note that the invention is not limited to the above-described embodiments, and may be implemented in various modified embodiments. For example, in the above-described embodiments, the outer faces 24b2, 56b2 of the bottom portions 24b, 56b of the bearing cups 24, 56, and the outer faces 25a1, 57a1 of the fitting portions 25a, 57a of the bearing holders 27, 57 are each formed in a circular arc-shape. However, as long as the paired cross joints 11 (12, 52, 53) are allowed to rotate without making contact with each other, the outer faces of the bottom portions of the bearing cups and/or the outer faces of the fitting portions of the bearing holders may be formed linearly. In the above-described embodiments, the phase difference between the paired first cross joints 11, 52 is set to 45°. However, the phase difference may be set to a value other than 45° as long as the first cross joints 11 (52) do not contact with each other during their rotations.

According to the invention, the bottom portion of one of the bearing cups of one of the paired cross joints is inserted in one of the recessed portions of the other one of the paired cross joints, and therefore the shaft portions of the joint spiders of the paired first cross joints are set to be longer in the directions of the central axes than the shaft portions of the conventional cross joints. Thus, the effective contact length of the rolling elements can be increased without changing the diameter of the shaft portions, unlike in the related art. That is, even if the value of the diameter d on the right side of formula (2) described above in paragraph [0005] is not increased, the value of the effective contact length B can be increased, and therefore the value of the rated torque Tr can be increased. As a result, the computed value of the right side of formula described above in paragraph [0004] and using the rated torque Tr can be increased. Thus, it is possible to increase the peeling resistance life of the cross joints.

With the spindle unit for a rolling mill according to the invention, it is possible to increase the service life of the cross joints and save the installation space.

## Claims

1. A spindle unit for a rolling mill, comprising:

   a pair of drive shafts (10) that respectively rotate a pair of rolls (2); and
   a pair of cross joints (11, 12) respectively coupled to a pair of roll-side end portions of the drive shafts or a pair of end portions of the drive shafts, the pair of end portions being on an opposite side of the drive shafts from the roll-side end portions, wherein
   each of the cross joints includes a joint spider (21) that has four shaft portions arranged in a cross shape and that is rotatable about a central axis (C) of the joint spider, a plurality of rolling elements (23) that roll on outer peripheral faces of the shaft portions, four bearing cups (24) respectively fitted on the shaft portions via the rolling elements (23) and each having a bottomed cylinder shape, and bearing holders disposed between the bearing cups (24) that are adjacent to each other and having fitting portions attached to another member, **characterized in that**
   outer faces of the fitting portions are recessed from outer faces of bottom portions of the bearing cups (24) toward the central axis (C) to define recessed portions (30) between the adjacent bearing cups (24) of the cross joint (11, 12),
   the paired cross joints (11, 12) are arranged with a prescribed phase difference in rotational directions about the central axes, and
   the paired cross joints (11, 12) are arranged in such a manner that the outer face of one of the bottom portions of the bearing cups (24) of one of the paired cross joints (11, 12) is inserted in one of the recessed portions of the other one of the paired cross joints (11, 12).

2. The spindle unit according to claim 1, wherein the phase difference is set to 45 degrees.

## Patentansprüche

1. Spindeleinheit für ein Walzwerk, aufweisend:

   ein Paar Antriebswellen (10), die ein Paar Walzen (2) jeweils drehen; und
   ein Paar Kreuzverbindungen (11, 12), die jeweils mit einem Paar walzenseitigen Endabschnitten der Antriebswellen oder einem Paar Endabschnitten der Antriebswellen gekoppelt sind, wobei sich das Paar Endabschnitte auf einer entgegengesetzten Seite der Antriebswellen in Bezug auf die walzenseitigen Endabschnitte befindet, wobei
   jede der Kreuzverbindungen ein Verbindungsdrehkreuz (21), das vier Wellenabschnitte hat, die in einer Kreuzform angeordnet sind, und das um eine Mittelachse (C) des Verbindungsdrehkreuzes drehbar ist, eine Vielzahl an Rollelementen (23), die auf äußeren Umfangsflächen der Wellenabschnitte rollen, vier Lagerschalen (24), die jeweils über die Rollelemente (23) auf die Wellenabschnitte aufgesteckt sind, und von denen jede einen Zylinderform mit einem Boden hat, und Lagerhalter, die zwischen den Lagerschalen (24), die angrenzend zueinander sind, angeordnet sind, und die Passabschnitte haben, die an einem anderen Glied befestigt sind, enthält, **dadurch gekennzeichnet, dass**

äußere Flächen der Passabschnitte aus äußeren Flächen von Bodenabschnitten der Lagerschalen (24) in Richtung der Mittelachse (C) ausgespart sind, um ausgesparte Abschnitte (30) zwischen den angrenzenden Lagerschalen (24) der Kreuzverbindung (11, 12) zu definieren,

die paarweisen Kreuzverbindungen (11, 12) mit einer vorgeschriebenen Phasendifferenz in Drehrichtungen um die Mittelachsen angeordnet sind, und

die paarweisen Kreuzverbindungen (11, 12) in solch einer Weise angeordnet sind, dass die äußere Fläche von einem der Bodenabschnitte der Lagerschalen (24) von einer der paarweisen Kreuzverbindungen (11, 12) in einen der ausgesparten Abschnitte der anderen der paarweisen Kreuzverbindungen (11, 12) eingefügt ist.

2. Spindeleinheit nach Anspruch 1, wobei die Phasendifferenz auf 45 Grad festgesetzt ist.

**Revendications**

1. Unité de broche pour un laminoir, comprenant :

une paire d'arbres d'entraînement (10) qui font tourner respectivement une paire de cylindres (2) ; et
une paire de joints (11, 12) respectivement couplés à une paire de parties d'extrémité du côté du cylindre des arbres d'entraînement ou une paire de parties d'extrémité des arbres d'entraînement, la paire de parties d'extrémité étant sur un côté opposé des arbres d'entraînement par rapport aux parties d'extrémité du côté du cylindre, dans laquelle
chacun des joints comprend un élément d'articulation en étoile (21) qui a quatre parties d'arbre agencées selon une forme de croix et qui peut tourner autour d'un axe central (C) de l'élément d'articulation en étoile, une pluralité d'éléments roulants (23) qui roulent sur des faces périphériques externes des parties d'arbre, quatre cuvettes de roulement (24) respectivement montées sur les parties d'arbre via les éléments roulants (23) et ayant chacune une forme cylindrique à fond, et des supports de palier disposés entre les cuvettes de roulement (24) qui sont adjacentes entre elles et ayant des parties de raccord fixées sur un autre élément, **caractérisée en ce que**
des faces externes des parties de raccord sont enfoncées par rapport aux faces externes des parties de fond des cuvettes de roulement (24) vers l'axe central (C) afin de définir des parties enfoncées (30) entre les cuvettes de roulement (24) adjacentes du joint (11, 12),
les joints (11, 12) en paire sont agencés avec une différence de phase prescrite dans des directions de rotation autour des axes centraux, et
les joints (11, 12) en paire sont agencés de sorte que la face externe de l'une des parties de fond des cuvettes de roulement (24) de l'un des joints (11, 12) en paire est insérée dans l'une des parties enfoncées de l'autre joint des joints (11, 12) en paire.

2. Unité de broche selon la revendication 1, dans laquelle la différence de phase est réglée sur 45 degrés.

FIG.1

EP 2 781 274 B1

FIG.2

FIG.3

FIG.4

FIG.5

FIG.6

FIG.7

FIG.8

FIG.9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000042614 A
- JP 07256311 B